# EUROPEAN PATENT SPECIFICATION

(11) **EP 2 179 671 B1**
(45) Date of publication and mention of the grant of the patent: **23.12.2015**
(21) Application number: 08018565.5
(22) Date of filing: 23.10.2008
(51) Int. Cl.: A44B 18/00, B29C 43/22

(54) **Method for making mushroom-type hook strap and mushroom-type hook strap made thereby**
Verfahren zur Herstellung einer pilzartigen Hakenband und dadurch hergestellte Hakenband
Procédé de fabrication de bande à crochet de type champignon et bande à crochet de type champignon fabriquée avec ce procédé

(43) Date of publication of application: 28.04.2010
(60) Divisional application: 15166620.3
(73) Proprietor: Taiwan Paiho Limited, Chang Hwa Hsien (TW)
(72) Inventor: Cheng, Sen Mei, Chang Hwa Hsien (TW)
(74) Representative: Bertsch, Florian Oliver

(56) References cited:
- EP-A- 0 897 677
- EP-A- 1 759 607
- US-A- 5 951 931

## Description

### Field of the Invention

The present invention relates generally to a method for making a hook strap for mechanical fasteners, and more specifically to a method for making a mushroom-type hook strap for mechanical fasteners.

### Background of the Invention

A hook-and-loop fastener is a well know fastener type and wildly adapted in a variety of fields that need to fasten two articles together, such as garment, hats/caps, sporting goods, etc.. A hook-and-loop fastener mainly consists of a hook strap on which a plurality of plastic hooks are formed and a loop strap on which a plurality of fabric loops are formed and by engaging/disengaging the hooks on the hook strap and the loops on the loop strap, a fastening/unfastening function is provided.

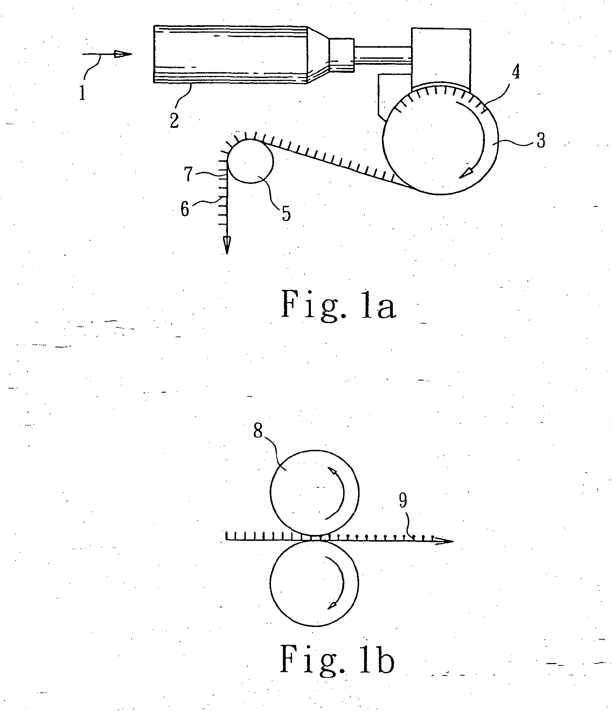

Fig. 1 illustrates a method for making a hook strap which generally includes: providing thermoplastic resin 1 into a plastic extruder 2; extruding melted thermoplastic resin 1 from the extruder 2 into a plurality of die cavities 4 formed in an outer periphery of a molding roller 3; cooling the molding roller 3 to form a hook strap 7 on which a plurality of upstanding stems 6 are molded; striping the hook strap off the molding roller 3 by a stripping roller 5; and feeding the hook strap through a nip formed between a pair of shaping rollers and the shaping roller that contacts the stems heats the free end of the stems to a temperature above a flow point of the thermoplastic reason to shape the stems into hooks with desired shape.

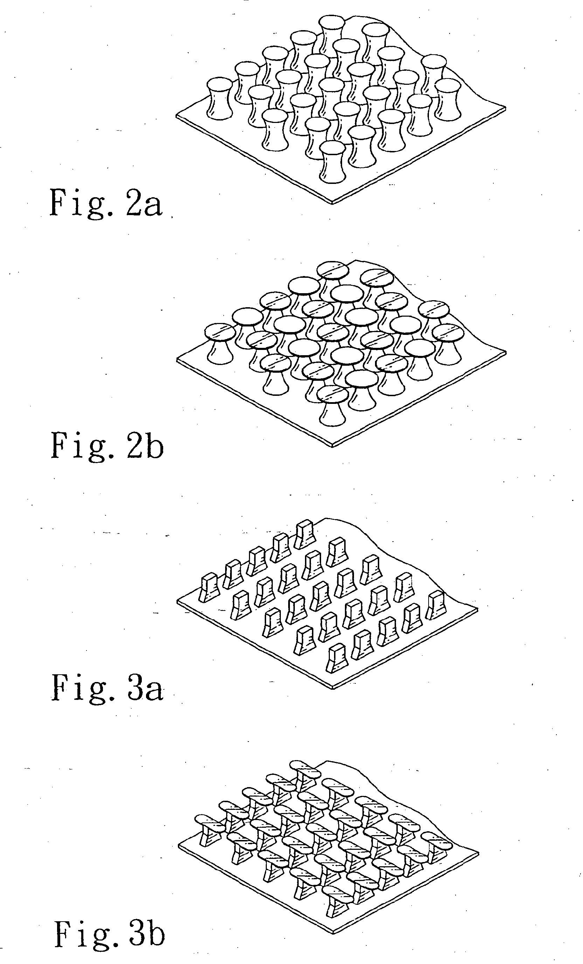

Figures 2 and 3 illustrate the structure of two existing mushroom-type hook strap respectively, wherein figure 2 shows an array of circular-headed mushroom-type hooks (Fig. 2b) that are formed from cylindrical stems (Fig. 2a); and figure 3 shows an array of elliptic-headed mushroom-type hooks (Fig. 3b) that are formed from tetragon stems (Fig. 3a). Although these two mushroom types of hooks both may provide certain fastening/unfastening function, they both have their own deficiencies. For instance, when engaging the circular-headed mushroom-type hooks illustrated in Fig. 2 with the fabric loops on the loop strap, the effective engaging percentage is relative low because the smooth periphery of the circular head of the hooks does not provide protruding portions that can engage with the fabric loops, and thus has a drawback of unable to provide sufficient fastening strength. Additionally, circular-headed mushroom-type hooks can provide effective engaging only when the head of the hooks fully inserted into the fabric loops forming a lockup type engagement. However, although this lockup type of engagement may provide a firm engagement, the fabric loops usually will be destroyed by the hooks during a detaching operation between the hook strap and the loop strap, and after several times of engaging/detaching operations the fastening capability will drop sharply or even loosing the fastening capability because the percentage of the loops been destroyed increases as the engaging/detaching operation number increases. As a result, the effective lifetime of this circular-headed mushroom-type hooks is relative short.

Although the ends of the major axis of the elliptic-headed mushroom-type hooks illustrated in Fig. 3 can form effective engagement with the fabric loops and thus can provide higher engagement percentage and larger fastening strength than above-mentioned circular-headed mushroom-type hooks, however, because this type of hooks form effective engagement with the fabric loops only at the ends of the major axis of the elliptic head, the effective fastening strength is provided only in a direction parallel the major axis of the elliptic head. The effective engagement with the loops in a direction perpendicular to the major axis of the elliptic head is much less than in the parallel direction. In other words, the fastening function provided by this type of hook-and-loop fastener is not an all-directional uniform fastening function, but a directional fastening function. Therefore, when the engagement between this type of elliptic-headed mushroom-type hooks and the loops is subjected to an external impact force in a specific direction (such as in a direction perpendicular to the major axis of the elliptic head), an unintentional disengaging may occur and pose a insufficient reliability problem to this type of hooks.

EP 1 759 607 A1 discloses a method of manufacturing a hook component with a T-shape.

EP 0 897 677 A2 discloses an integrally molded surface fastener with four major molding parts.

In view of the above-mentioned disadvantages/problems associated with the existing mushroom-type hook strap, there exists a need for a method for making a mushroom-type hook strap with a high and uniform engaging force in al directions.

### Summary of the Invention

This object may be achieved by a method for making a mushroom-type hook strap for mechanical fasteners as mentioned in claim 1. This method includes the steps of:
providing a rotational molding roller, the molding roller having a plurality of substantially Y-shaped molding cavities formed in an outer periphery surface thereof and a cooling device provided therein;
providing an extruder, the extruder having a extruding die disposed imminently close to the outer periphery surface of the rotational molding roller with a gap being formed therebetween;
feeding a thermoplastic material to the extruder and melting the thermoplastic material in the extruder so as to extrude the melted thermoplastic material into the plurality of substantially Y-shaped molding cavities and onto the outer periphery surface of the rotational molding roller through the extruding die;
cooling the thermoplastic material on the outer periphery surface of the rotational molding roller and within the substantially Y-shaped molding cavities with the cooling device so as to form a hook strap on which an plurality of hook prefroms are molded, each preform having a substantially V-shaped free end;
peeling off the hook strap from the molding roller; and
feeding the hook strap through a nip formed between a pair of calendar rolls, wherein the calendar roll that contacts the V-shaped free end of the hook preforms is heated to a temperature above a plastic deforming temperature of the plastic material so as to deform the V-shaped free end of each hook preform into a polygonal head shape and thereby forming a mushroom type hook having a polygonal head portion.

According to one embodiment of the present invention, the plan containing the two intersected arms of the V-shaped free end of the hook preform is parallel to the direction that the hook strap is fed through the calendar rolls.

Features and objects of the present invention other than the above will become clear by reading the description of the present specification with reference to the accompanying drawings.

### Brief Description of the Drawings

For a more complete understanding of the present invention and the advantages thereof, reference is now made to the following description taken in conjunction with the accompanying drawings, wherein:
Fig. 1 is a schematic view illustrating an apparatus form making traditional hook straps;
Fig. 2a and 2b are enlarged schematic perspective views showing the structure of one of existing mushroom-type hooks;
Fig. 3a and 3b are enlarged schematic perspective views showing the structure of another existing mushroom-type hooks;
Fig. 4 is a schematic view illustrating an apparatus for making the inventive mushroom-type hook strap according to one embodiment of the present invention; and
Fig. 5 is an enlarged schematic perspective view showing the structure of the hook preforms before and after being fed through the calendar rolls.

### Detailed Description of the Invention

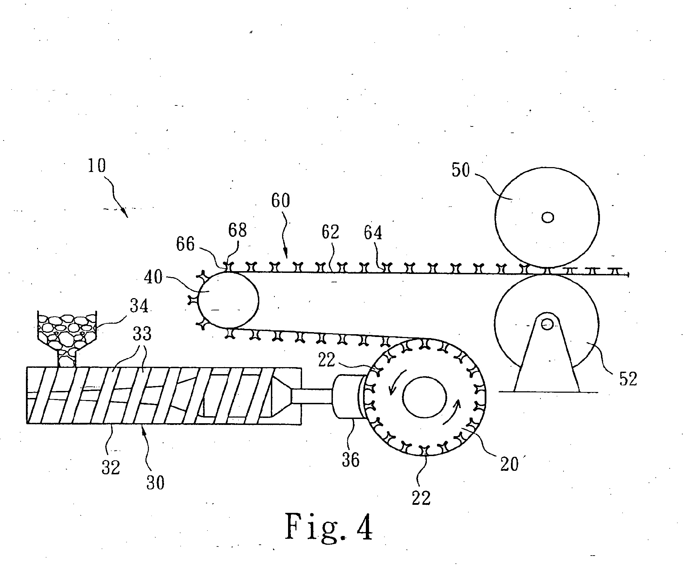

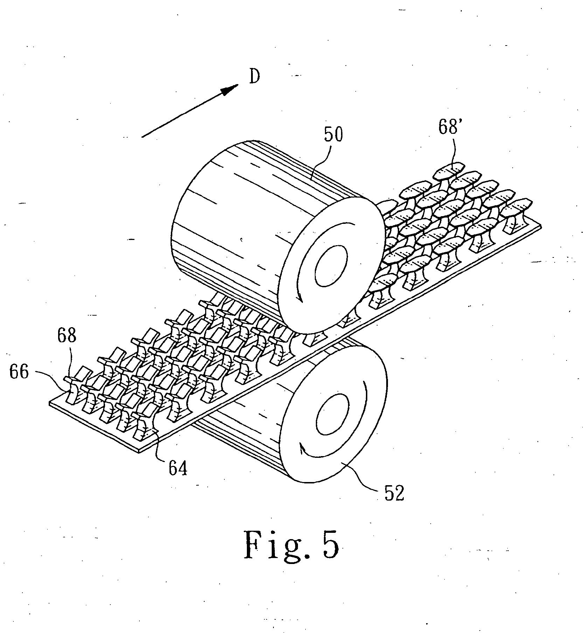

Referring now to figures 4 and 5 in which a preferred embodiment of the method of the present invention and a mushroom-type hook strap made thereby is illustrated to describe the present invention.

Fig. 4 is a schematic view illustrating an apparatus 10 for making the inventive mushroom-type hook strap according to one embodiment of the present invention. The apparatus 10 mainly includes a rotational molding roller 20, an extruder 30, a stripping roll 40 and a pair of calendar rollers 50 and 52. The molding roller 20 has a plurality of substantially Y-shaped molding cavities 22 formed in an outer periphery surface thereof and a cooling device (not shown), such as a cooling water circulating system, provided therein. The extruder 30 includes a melting chamber 32 for melting the plastic material, and the melting chamber 32 is surrounded by heating coils 33. The extruder 30 further includes a feed tank 34 disposed at one end of the melting chamber 32 and an extruding die 36 operationally coupled to the other end of the melting chamber 32. The extruding die 36 is disposed imminently close to the outer periphery surface of the rotational molding roller 20 with a gap being formed therebetween. This gap may be varied by moving the extruding die 36 relative to the outer periphery surface of the rotational molding roller 20.

When executing the inventive method of the present invention, a thermoplastic material (for example, polyethylene) is firstly supplied to the feed tank 34 and through which the thermoplastic material is fed into the extruder 30. The thermoplastic material is melted in the melting chamber 32 by the heating coils 33 (for example, the temperature in the melting chamber is heated up to 235°C). The melted thermoplastic material is then ejected through the extruding die 36 onto the outer periphery surface of the rotational molding roller 20 and into the plurality of substantially Y-shaped molding cavities 22. After the thermoplastic material that on the outer periphery surface of the rotational molding roller 20 and within the plurality of substantially Y-shaped molding cavities 22 is cooled and solidified by the cooling device of the molding roller 20, it is peeled off from the molding roller 20 by a stripping roll 40 to formed a hook strap 60 and the hook strap 60 includes a backing 62 and a plurality of hook preforms 64 integrally molded on the backing 62. The hook strap 60 is then fed through a nip formed between the calendar rolls 50 and 52.

In the embodiment shown in Fig. 5, each of the preforms 64 is molded into a polygonal peg (such as a tetragon peg as shown in the drawing) and includes a stem portion 66 and a substantially V-shaped free end 68. In addition, in the embodiment shown in Fig. 5, the plan that contains the intersected arms of the V-shaped free end of the hook perform 64 is parallel to a direction D that the hook strap 60 is fed through the calendar rolls 50 and 52.

The calendar roll 50 that contacts the V-shaped free ends of the hook preforms 64 is heated to and maintained at a plastic deforming temperature of the thermoplastic material. For example, in the case that polyethylene is used as the thermoplastic material the calendar roll 50 is heated to and maintained at 130°C. Additionally, a nip is formed between the calendar rolls 50 and 52 and this nip can be adjusted such that the nip is smaller than a sum of the thickness of the backing 62 and the height of the preform 64 and substantially equal to the height of the stem portion 66 of the hook preform 64. Thereby, while being fed through the calendar rolls 50 and 52, the V-shaped free end 68 of the preform 64 will be plastically deformed as a polygonal head portion 68', as shown in Fig. 5.

Because the hooks of the hook strap produced by the method of the present invention has a polygonal head portion 68', a number of protruding portions are provided by the head portion 68' to form effective engagement with the loops of a loop strap and a higher engaging percentage can thus be provided. In addition, because the hooks of the hook strap of the present invention engage the loops of a loop strap with the protruding portions of polygonal head portion, no loops will be destroyed during a detaching operation and thus a longer lifetime for the hook strap may be provided. Moreover, the polygonal head portion of the hooks of the hook strap of the present invention provides protruding portions in substantially every direction for engaging the fabric loops of a loop strap and thus the hook strap of the present invention can provide a uniform engaging function in substantially all direction.

Although the present invention has been described above according to the preferred embodiment thereof, this does not mean that the scope of the present invention is limited to specific structure and operation steps described above. In fact, there exist various modifications and variations under the principle and spirit disclosed above. For instance, an auxiliary cooling device, such as a cooling fan, may be disposed relative to the molding roller 20 at a position diametrically opposite to the extruding die 36 to provide extra cooling effect to the hook strap on the outer periphery surface of the molding roller 20.

It will be apparent to people skilled in this art that many modifications can be made to the disclosed structures/steps without departing from the scope of the claims.

## Claims

1. A method for making a mushroom-type hook strap for mechanical fasteners, the method comprising the steps of:
providing a rotational molding roller, the molding roller having a plurality of substantially Y-shaped molding cavities formed in an outer periphery surface thereof and a cooling device provided therein;
providing an extruder, the extruder having a extruding die disposed imminently close to the outer periphery surface of the rotational molding roller with a gap being formed therebetween;
feeding a thermoplastic material to the extruder and melting the thermoplastic material in the extruder so as to extrude the melted thermoplastic material into the plurality of substantially Y-shaped molding cavities and onto the outer periphery surface of the rotational molding roller through the extruding die;
cooling the thermoplastic material on the outer periphery surface of the rotational molding roller and within the substantially Y-shaped molding cavities with the cooling device so as to form a hook strap on which an plurality of hook prefroms are molded, each preform having a substantially V-shaped free end;
peeling off the hook strap from the molding roller; and
feeding the hook strap through a nip formed between a pair of calendar rolls, wherein the calendar roll that contacts the V-shaped free end of the hook preforms is heated to a temperature above a plastic deforming temperature of the plastic material so as to deform the V-shaped free end of each hook preform into a polygonal head shape and thereby forming a mushroom type hook having a polygonal head portion, the polygonal head portion providing protruding portions in substantially every direction for engaging fabric loops of a loop strap.

2. A method for making a mushroom-type hook strap for mechanical fasteners according to claim 1, wherein a plan that contains the two intersected arms of the V-shaped free end of the hook preform is parallel to the direction that the hook strap is fed through the calendar rolls.

3. A method for making a mushroom-type hook strap for mechanical fasteners according to claim 1 or 2, wherein the gap between the extruding die and the outer periphery surface of the rotational molding roller can be adjusted by moving the extruding die relative to the.molding roller.

4. A method for making a mushroom-type hook strap for mechanical fasteners according to any of the preceding claims, wherein the peeling off step is performed by a rotational stripping roll.

5. A method for making a mushroom-type hook strap for mechanical fasteners according to any of the preceding claims further comprising the step of providing an auxiliary cooling device outside the molding roller to provide extra cooling to the outer periphery surface of the rotational molding roller.

## Patentansprüche

1. Verfahren zur Herstellung eines pilzförmigen Hakenbands für mechanische Befestigungselemente, wobei das Verfahren die folgenden Schritte umfasst:
Bereitstellen einer Rotationsformwalze, wobei die Rotationsformwalze eine Vielzahl von, im Wesentlichen Y-förmigen Formhohlräumen aufweist, die in einer äußeren Umfangsfläche davon ausgebildet sind, und wobei eine Kühlvorrichtung darin bereitgestellt wird;
Bereitstellen eines Extruders, wobei der Extruder eine Extrusionsdüse aufweist, die in unmittelbarer Nähe zur äußeren Umfangsfläche der Rotationsformwalze mit einem Spalt dazwischen angeordnet ist;
Zuführen eines thermoplastischen Materials in den Extruder und Schmelzen des thermoplastischen Materials in dem Extruder, so dass das geschmolzene thermoplastische Material in die Vielzahl von im Wesentlichen Y-förmigen Formhohlräumen und auf die äußere Umfangsfläche der Rotationsformwalze durch die Extrusionsdüse extrudiert wird;
Kühlen des thermoplastischen Materials auf der äußeren Umfangsfläche der Rotationsformwalze und innerhalb der im Wesentlichen Y-förmigen Formhohlräume mit der Kühlvorrichtung, so dass ein Hakenband gebildet wird, auf dem eine Vielzahl von Hakenvorformlingen geformt werden, wobei jeder Vorformling ein, im Wesentlichen V-förmiges freies Ende aufweist;
Abziehen des Hakenbands aus der Formwalze; und
Zuführen des Hakenbands durch einen Spalt zwischen einem Paar von Kalenderwalzen, wobei die Kalenderwalze, die in Kontakt mit dem V-förmigen freien Ende der Hakenvorformlinge steht, auf eine Temperatur oberhalb einer Kunststoffverformungstemperatur des Kunststoffes erwärmt wird, so dass das V-förmige freie Ende jedes Hakenvorformlings in eine polygonale Kopfform verformt wird und dadurch ein pilzförmiger Haken mit einem polygonalen Kopfteil geformt wird, wobei der polygonale Kopfteil vorstehende Abschnitte in im Wesentlichen jeder Richtung bereitstellt, um in Gewebeschleifen eines Schleifenbands einzugreifen.

2. Verfahren zur Herstellung eines pilzförmigen Hakenbands für mechanische Befestigungselemente nach Anspruch 1, wobei eine Ebene, die die beiden gekreuzten Arme des V-förmigen freien Endes des Hakenvorformlings umfasst, parallel zu der Richtung verläuft, bei der das Hakenband durch die Kalenderwalze hindurchgeführt wird.

3. Verfahren zur Herstellung eines pilzförmigen Hakenbands für mechanische Befestigungselemente nach Anspruch 1 oder 2, wobei der Spalt zwischen der Extrudierdüse und der äußeren Umfangsfläche der Rotationsformwalze durch Bewegen der Extrusionsdüse relativ zur Formwalze einstellbar ist.

4. Verfahren zur Herstellung eines pilzförmigen Hakenbands für mechanische Befestigungselemente nach einem der vorhergehenden Ansprüche, wobei der Abziehschritt mit einer Drehabstreifrolle durchgeführt wird.

5. Verfahren zur Herstellung eines pilzförmigen Hakenbands für mechanische Befestigungselemente nach einem der vorhergehenden Ansprüche, ferner den Schritt des Bereitstellens einer Zusatzkühleinrichtung außerhalb der Formwalze, umfassend, um eine zusätzliche Kühlung an der äußeren Umfangsfläche der Rotationsformwalze bereit zustellen.

## Revendications

1. Procédé pour fabriquer une bande à crochets de type champignon pour des fixations mécaniques, le procédé comprenant les étapes consistant à :
prévoir un rouleau de moulage rotatif, le rouleau de moulage ayant une pluralité de cavités de moulage sensiblement en forme de Y formées dans sa surface périphérique externe et un dispositif de refroidissement prévu à l'intérieur de ce dernier ;
prévoir une extrudeuse, l'extrudeuse ayant une matrice d'extrusion disposée très près de la surface périphérique externe du rouleau de moulage rotatif avec un espace qui est formé entre elles ;
amener un matériau thermoplastique à l'extrudeuse et faire fondre le matériau thermoplastique dans l'extrudeuse afin d'extruder le matériau thermoplastique fondu dans la pluralité de cavités de moulage sensiblement en forme de Y et sur la surface périphérique externe du rouleau de moulage rotatif par le biais de la matrice d'extrusion ;
faire refroidir le matériau thermoplastique sur la surface périphérique externe du rouleau de moulage rotatif et à l'intérieur des cavités de moulage sensiblement en forme de Y avec le dispositif de refroidissement afin de former une bande à crochets sur laquelle une pluralité de préformes de crochet sont moulées, chaque préforme ayant une extrémité libre sensiblement en forme de V ;
détacher la bande à crochets du rouleau de moulage ; et
amener la bande à crochets par une ligne de pincement formée entre une paire de rouleaux calandreurs, dans lequel le rouleau calandreur qui est en contact avec l'extrémité libre en forme de V des préformes, est chauffé à une température supérieure à la température de déformation plastique de la matière plastique afin de déformer l'extrémité libre en forme de V de chaque préforme de crochet en une forme de tête polygonale et former ainsi un crochet de type champignon ayant une partie de tête polygonale, la partie de tête polygonale fournissant des parties en saillie sensiblement dans chaque direction pour mettre en prise des boucles de tissu d'une bande à boucles.

2. Procédé pour fabriquer une bande à crochets de type champignon pour des fixations mécaniques selon la revendication 1, dans lequel un plan qui contient deux bras qui se coupent de l'extrémité libre en forme de V de la préforme de crochet est parallèle à la direction dans laquelle la bande à crochets est amenée par les rouleaux calandreurs.

3. Procédé pour fabriquer une bande à crochets de type champignon pour des fixations mécaniques selon la revendication 1 ou 2, dans lequel l'espace entre la matrice d'extrusion et la surface périphérique externe du rouleau de moulage rotatif peut être ajusté en déplaçant la matrice d'extrusion par rapport au rouleau de moulage.

4. Procédé pour fabriquer une bande à crochets de type champignon pour des fixations mécaniques selon l'une quelconque des revendications précédentes, dans lequel l'étape de détachement est réalisée par un rouleau détacheur rotatif.

5. Procédé pour fabriquer une bande à crochets de type champignon pour des fixations mécaniques selon l'une quelconque des revendications précédentes, comprenant en outre l'étape consistant à prévoir un dispositif de refroidissement auxiliaire à l'extérieur du rouleau de moulage pour fournir un refroidissement supplémentaire à la surface périphérique externe du rouleau de moulage rotatif.
